# EUROPÄISCHE PATENTSCHRIFT

(11) **EP 1 451 490 B1**
(45) Veröffentlichungstag und Bekanntmachung des Hinweises auf die Patenterteilung: **17.06.2009**
(21) Anmeldenummer: 02794965.0
(22) Anmeldetag: 02.12.2002
(51) Int. Cl.: F16H 59/10

(54) **SCHALTKNAUF**
SHIFT KNOB
POMMEAU DE CHANGEMENT DE VITESSE

(30) Priorität: 03.12.2001 DE 10158934
(43) Veröffentlichungstag der Anmeldung: 01.09.2004
(73) Patentinhaber: ZF Lemförder Metallwaren AG, 49448 Lemförde (DE)
(72) Erfinder: MEYER, Jörg, 49419 Wagenfeld (DE); MEYER, Klemens, 49074 Osnabrück (DE); SZEKERES-KRISELIUS, Jan, 49459 Lembruch (DE)
(86) Internationale Anmeldenummer: PCT/DE2002/004413
(87) Internationale Veröffentlichungsnummer: WO 2003/048611

(56) Entgegenhaltungen:
- EP-A- 1 170 655
- US-A- 5 575 174
- PATENT ABSTRACTS OF JAPAN vol. 1997, no. 11, 28. November 1997 (1997-11-28) -& JP 09 183315 A (DELTA KOGYO CO LTD), 15. Juli 1997 (1997-07-15)

## Beschreibung

Die Erfindung betrifft einen Schalthebel mit Schaltknauf ein Automatikgetriebe in einem Kraftfahrzeug gemäß dem Oberbegriff des Anspruchs 1.

Aus der US-A 5,575,174 ist ein Schaltknauf für einen Schalthebel, gemäß dem Oberbegriff des Anspruchs 1, eines Automatikgetriebes eines Kraftfahrzeuges mit einer in dem Schalthebel axial geführten Sperrstange und einem von Hand betätigbaren Entriegelungsknopf zur Betätigung der Sperrstange relativ zum Schalthebel bekannt. Bei dieser Ausführung ist der Entriegelungsknopf in dem Schaltknauf am oberen Ende des Schalthebels angeordnet und mittels zumindest eines Hebelarmes über eine Lagerstelle mit dem Schaltknauf verbunden.

Ferner ist aus der DE 195 13 809 C1 ein Schalthebel für ein Automatikgetriebe in einem Kraftfahrzeug bekannt, welcher eine am Schalthebel axial beweglich geführte Sperrstange und von Hand bewegliche Mittel zur Betätigung der Sperrstange relativ zum Schalthebel aufweist, welche in einem Schaltknauf am oberen Ende des Schalthebels angeordnet sind. Die Mittel zur axialen Bewegung der Sperrstange bestehen aus einer an der Sperrstange angeordneten Zahnstange und aus einem in deren Verzahnung eingreifenden, in dem Schaltknauf schwenkbar gelagerten Zahnsegment, welches durch Fingerdruck gegen einen im Schaltknauf linear beweglich geführten Sperrschieber gegen Federwirkung der Sperrstange in einem durch Anschläge begrenzten Winkelbereich schwenkbar ist.

Weiterhin ist aus der DE 198 29 173 A1 ein Schalthebel mit Sperrstange für ein Automatikgetriebe in einem Kraftfahrzeug bekannt, welcher einen am oberen Ende des Schalthebels angeordneten Knauf, eine am Schalthebel axial geführte Sperrstange und von Hand bewegliche Mittel zur Betätigung der Sperrstange relativ zum Schalthebel umfaßt, wobei zwei der Mittel eine ineinandergreifende Verzahnung aufweisen und diese Mittel so angeordnet sind, dass eine Annäherung wenigstens eines der Mittel an die Sperrstange eine axiale Bewegung der Sperrstange hervorruft. Mindestens eine der Verzahnungen verläuft dabei entlang einer Kurve, wobei die wirksame Kraftübersetzung durch einen ersten der Kurvenradien größer ist als die Kraftübersetzung des zweiten Radius.

Auch aus der DE 199 50 638 A1 ist eine Schaltvorrichtung mit einem Schalthebel für ein Automatikgetriebe eines Kraftfahrzeugs bekannt, welche einen Entriegelungsmechanismus zum Entriegeln des Schalthebels mit einem Handbetätigungselement aufweist, wobei der Schalthebel in mindestens einer Schaltgasse zwischen mindestens zwei unterschiedlichen Schaltstellungen beweglich und in diesen Schaltstellungen zumindest teilweise in Abhängigkeit von unterschiedlichen Fahrzeugkonfigurationen verriegelbar ist. Zwischen dem Handbetätigungselement und der Entriegelungsmechanik ist ein federndes Kraftübertragungselement vorgesehen.

Nachteilig an den aus den oben genannten Druckschriften bekannten Schaltvorrichtungen und Schalthebeln ist insbesondere, dass die zum Betätigen der Sperrstange benötigten initialen linearen Kräfte relativ groß sind, so dass am Anfang sehr große Daumenkräfte zur Betätigung der Schaltung erforderlich werden. Hierdurch entsteht das Gefühl einer hakeligen Schaltung, deren Kraftverläufe physiologisch ungünstig ausgestaltet sind.

Eine Kippbewegung des Bedienungsschalters ist gleichermaßen nachteilig, da zwar der Kraftaufwand verringert wird, das Spiel des Bedienungsschalters jedoch als unangenehm empfunden wird.

Weiterhin ist von Nachteil, dass die beschriebenen Schaltmechanismen aufwendig und dadurch kostenungünstig in der Herstellung sind.

Es ist daher Aufgabe der Erfindung, einen einen Schalthebel mit einem Schaltknauf für ein Automatikgetriebe in einem Kraftfahrzeug darzustellen, welcher die oben angeführten Nachteile des Standes der Technik verbessert und insbesondere eine ergonomische Gestaltung der Bewegungsabläufe zur Gewährleistung eines flüssigen Schaltvorgangs sicherstellt.

Die Aufgabe wird durch das Kennzeichen des Anspruchs 1 in Verbindung mit den gattungsbildenden Merkmalen gelöst.
Vorteilhafte Weiterbildungen und Verbesserungen des im Anspruch 1 angegebenen Schaltknaufs sind in den Unteransprüchen aufgeführt.

Der Entriegelungsknopf des Schaltknaufs ist so gelagert, dass bedingt durch den langen Hebelarm lediglich ein kleine Bewegung auf einem möglichst großen Radius ausgeführt werden muß, welche folglich als linear empfunden wird, um den Entriegelungsknopf zu betätigen. Vorteilhafterweise sind zwei Hebelarme vorgesehen, um eine erhöhte seitliche Stabilität bei Betätigung des Entriegelungsknopfes zu gewährleisten.

Erfindungsgemäß wird dabei die im Wesentlichenlineare Bewegung des Betätigungsknopfes in eine Rotationsbewegung des Umlenkhebels zur Entriegelung des Sperrhebels umgesetzt wird, ohne dass die Nachteile einer Linearführung auftreten.

Vorteilhaft ist dabei insbesondere, dass der Entriegelungsknopf in jeder Position durch eine Schenkelfeder so beaufschlagt ist, dass er spielfrei ist und daher ohne Kippelbewegung und Leerweg sofort auf eine Betätigung reagiert.
Weitere Ausgestaltungen und Merkmale der Erfindung sind aus der nachfolgenden Beschreibung eines bevorzugten Ausführungsbeispiels unter Bezugnahme auf die Zeichnungen ersichtlich.

Es zeigen:
- Fig. 1: einen erfindungsgemäß ausgestalteten Schaltknauf mit Entriegelungsknopf in einer schematischen, perspektivischen Ansicht,
- Fig. 2: eine schematische, perspektivische Ansicht des erfindungsgemäß ausgestalteten Schaltknaufs ohne Verkleidung,
- Fig. 3A: einen Längsschnitt durch den erfindungsgemäß ausgestalteten Schaltknauf in einer ersten Schaltstellung, und
- Fig. 3B: einen Längsschnitt durch den erfindungsgemäß ausgestalteten Schaltknauf in einer zweiten Schaltstellung.

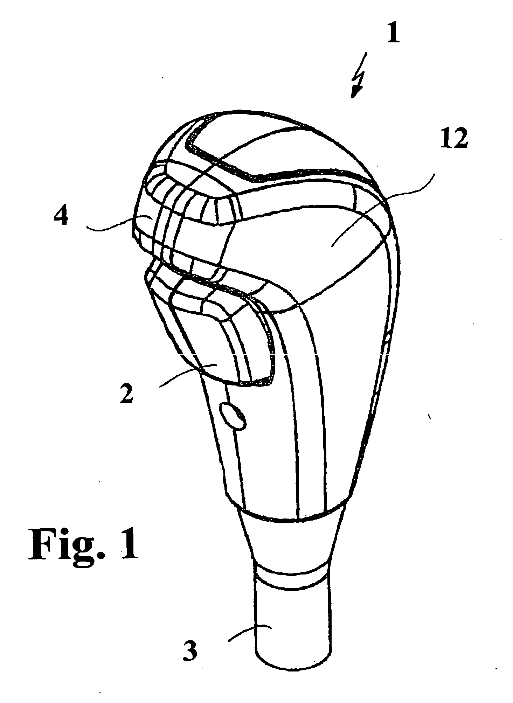

Fig. 1 zeigt einen erfindungsgemäß ausgestalteten Schaltknauf 1 mit Entriegelungsknopf 2 in einer perspektivischen schematischen Ansicht. Der Schaltknauf 1 ist dabei an einem oberen Ende eines Schalthebels 3 angebracht und eignet sich insbesondere zum Einsatz in einem Automatikgetriebe in einem Kraftfahrzeug.

In Fig. 1 ist der Entriegelungsknopf 2 in einer weiter unten näher beschriebenen verriegelten Schaltstellung dargestellt. Der Schaltknauf 1 ist ergonomisch so geformt, dass ein Fahrer des Kraftfahrzeugs den Schaltknauf 1 bequem mit der Handfläche umfassen und mit dem Daumen den Entriegelungsknopf 2 zur Entriegelung eines Verriegelungsmechanismus des Schalthebels 3 bedienen kann. Der Verriegelungsmechanismus dient dabei dazu, einen unbeabsichtigten Wechsel zwischen verschiedenen Positionen des Schalthebels 3 beim Betrieb des Kraftfahrzeugs zu verhindern. Verriegelt sind dabei beispielsweise die Positionen P nach R und umgekehrt sowie N nach R, wobei P die Parkposition, R die Position des Rückwärtsgangs und N die Neutralposition bezeichnet. Dadurch wird ein versehentlicher Wechsel beispielsweise durch ein Hängenbleiben am Schalthebel 3 vermieden, so dass das Kraftfahrzeug nicht unabsichtlich in Bewegung kommen kann.

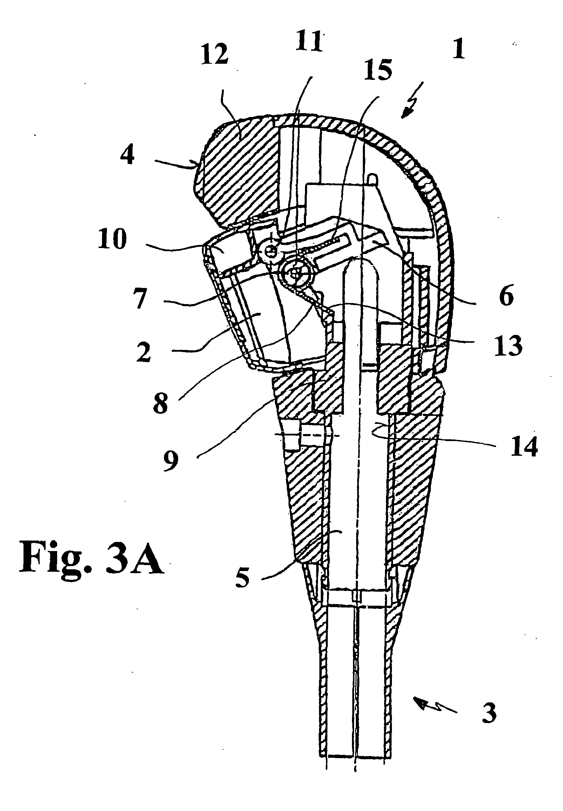

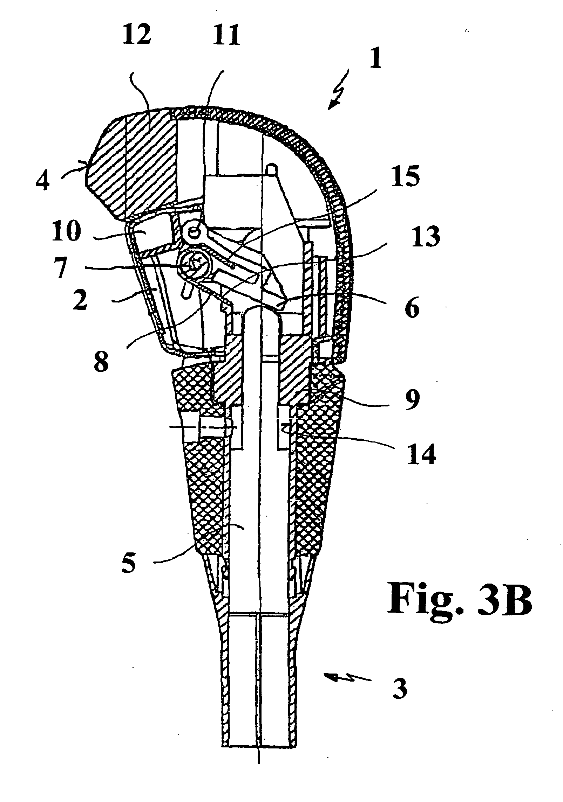

Um zu gewährleisten, dass sowohl eine unbeabsichtigte Betätigung des Entriegelungsknopfes 2 als auch eine Beschädigung desselben beispielsweise durch Hängenbleiben eines Handtaschenriemens unmöglich sind, ist dieser, wie aus Fig. 1 ersichtlich, so angeordnet, dass ein Vorsprung 4 im oberen Teil des Schaltknaufs 1 den Entriegelungsknopf 2 in radialer Richtung überragt. Dies trifft sowohl für die in Fig. 3A dargestellte erste Schaltstellung als auch für die in Fig. 3B dargestellte zweite Schaltstellung zu. Der Vorsprung kann dabei beispielsweise durch eine Umspritzung 12 des Schaltknaufs 1 gebildet sein.

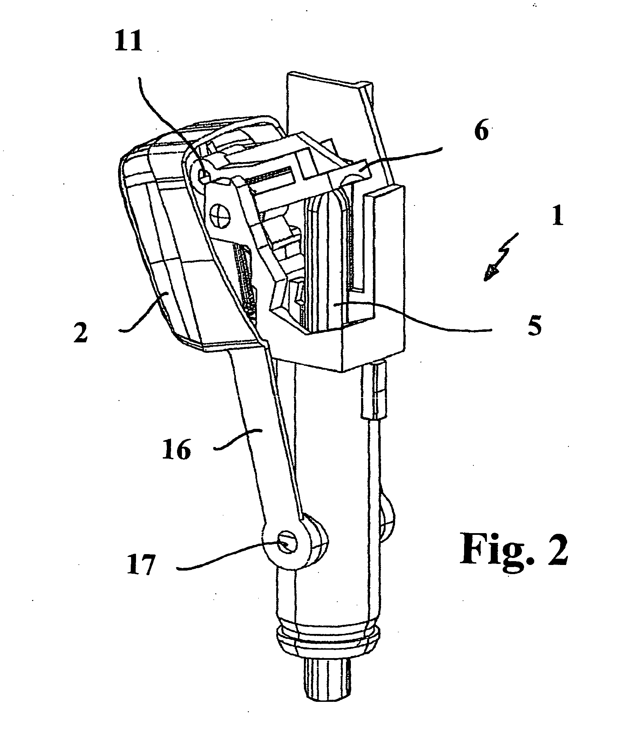

Fig. 2 zeigt in einer schematischen perspektivischen Ansicht den in Fig. 1 dargestellten Schaltknauf 1 ohne die Umspritzung 12 sowie ohne weitere Verkleidungen.

Aus Fig. 2 ist erkennbar, dass der Entriegelungsknopf2 über zwei seitliche Hebelarme 16 an einer Lagerstelle 17 mit dem Schaltknauf 1 verbunden ist. Die Hebelarme 16 erstrecken sich dabei nahezu über die gesamte Länge des Schaltknaufs 1. Wird der Entriegelungsknopf 2 gedrückt, dreht bzw. verschwenkt sich dieser über die Hebelarme 16 um die Lagerstelle 17, wodurch ein in den Fig. 3A und 3B näher beschriebener Umlenkhebel 6 auf eine Sperrstange 5 einwirkt und dadurch einen nicht weiter dargestellten Verriegelungsmechanismus betätigt.

Fig. 3A zeigt einen Längsschnitt durch den erfindungsgemäß ausgestalteten Schaltknauf 1 in einer ersten Schaltstellung. Der Entriegelungsknopf 2 befindet sich dabei in einer nicht gedrückten Position, welche einem verriegelten Schalthebel 3 entspricht. Die Hebelarme 16 des Entriegelungsknopfes 2 sind bedingt durch die gewählte Schnittebene nicht mehr sichtbar.

In der verriegelten Stellung des Schalthebels 3 liegt der oben erwähnte Umlenkhebel 6 an einem zumindest teilweise halbkugelförmigen oberen Ende der Sperrstange 5 des Verriegelungsmechanismus an, welche durch eine nicht weiter dargestellte Feder so beaufschlagt ist, dass der Entriegelungsknopf 2 ohne Spiel in seiner verriegelten Schaltstellung gehalten wird. Der Umlenkhebel 6 steht in kraftschlüssiger Verbindung mit einem Lager 7 einer Schenkelfeder 8, welche zwischen dem Umlenkhebel 6 und einem Träger 9 eingespannt ist, wobei der Träger 9 hier die Form einer Lagerhülse aufweist. Der Träger 9 ist dabei in einer Ausnehmung 14 des Schaltknaufs 1 angeordnet. Die Schenkelfeder 8 stützt sich mit einem ersten Schenkel 13 an dem Träger 9 und mit einem zweiten Schenkel 15 an dem Umlenkhebel 6 ab, so dass der Umlenkhebel 6 in jeder Position des Entriegelungsknopfes 2 durch die Schenkelfeder 8 beaufschlagt ist. Dadurch ist sichergestellt, dass der Entriegelungsknopf 2 spielfrei bleibt. Kippelnde Bewegungen bei der Betätigung des Entriegelungsknopfes 2 und Leerwege können dadurch vermieden werden.

Wird der Entriegelungsknopf2, wie in Fig. 3B dargestellt, in den Schaltknauf 1 hineingedrückt, drückt ein Betätigungselement 10, welches in dem Entriegelungsknopf 2 angeordnet ist, den Umlenkhebel 6 bedingt durch die große Länge der Hebelarme 16 des Entriegelungsknopfes 2 annähernd linear in den Schaltknauf 1 hinein und bewirkt durch die räumliche Beabstandung eines Lagerungspunktes 11 des Umlenkhebels 6 von dem Lager 7 der Schenkelfeder 8 eine Rotationsbewegung des Umlenkhebels 6 im Uhrzeigersinn. Dabei stehen der Lagerungspunkt 11 des Umlenkhebels 6 und das Lager 7 der Schenkelfeder 8 in Wirkverbindung miteinander. Dadurch wird die Sperrstange 5 in dem Schalthebel 3 gegen die Kraft der nicht dargestellten Feder nach unten gedrückt, wodurch der nicht weiter dargestellte Verriegelungsmechanismus den Schalthebel 3 freigibt. Dadurch, dass die Länge des Umlenkhebels 6 bzw. der Abstand des Lagerungspunktes 11 des Umlenkhebels 6 zu dem Lager 7 der Schenkelfeder 8 erheblich kürzer sind als die Hebelarme 16 des Entriegelungsknopfes 2, kann eine Rotationsbewegung zur Entriegelung des Entriegelungsknopfes 2 durch eine dem Benutzer rein linear erscheinende Bewegung des Entriegelungsknopfes 2 erzielt werden.

Durch die Spannung der Schenkelfeder 8 wird der Entriegelungsknopf 2 auch in dieser Schaltstellung so beaufschlagt, dass er spielfrei bleibt. Dadurch kann in jeder Schaltstellung, wobei auch Zwischenstellungen eingeschlossen sind, welche beispielsweise zwischen den in den Fig. 3A und 3B dargestellten Schaltstellungen liegen, ein definierter fester Druckpunkt, welcher ohne Leerwege oder Kippelbewegungen sofort auf Druck anspricht, aufrechterhalten werden.

Da der Umlenkhebel 6 im Vergleich zu dem Abstand der Lagerungsstelle 11 des Umlenkhebels 6 zum Lager 7 der Schenkelfeder 8 relativ lang ist, findet die Drehbewegung, welche die Betätigung der Sperrstange 5 auslöst, auf einem relativ großen Radius statt. Dadurch wird beim Benutzer der Eindruck verstärkt, dass der Entriegelungsknopf 2 ausschließlich in einer linearen Bewegung betätigt wird, welche als angenehmer als eine Kippbewegung empfunden wird, ohne dass die Nachteile einer Linearführung auftreten.

### Bezugszeichenliste

- 1: Schaltknauf
- 2: Entriegelungsknopf
- 3: Schalthebel
- 4: Vorsprung
- 5: Sperrstange
- 6: Umlenkhebel
- 7: Lager
- 8: Schenkelfeder
- 9: Träger
- 10: Betätigungselement
- 11: Lagerungspunkt des Umlenkhebels 6
- 12: Umspritzung des Schaltknaufes 1
- 13: erster Schenkel der Schenkelfeder 8
- 14: Ausnehmung des Schaltknaufs 1
- 15: zweiter Schenkel der Schenkelfeder 8
- 16: Hebelarme des Entriegelungsknopfs 2
- 17: Lagerstelle der Hebelarme 16

## Patentansprüche

1. Schalthebel (3) mit Schaltknauf (1) für ein Automatikgetriebe eines Kraftfahrzeuges mit einer in dem Schalthebel (3) axial geführten Sperrstange (5) und einem von Hand betätigbaren Entriegelungsknopf (2) zur Betätigung der Sperrstange (5) relativ zum Schalthebel (3), wobei der Entriegelungsknopf (2) in dem Schaltknauf (1) am oberen Ende des Schalthebels (3) angeordnet ist und der Entriegelungsknopf (2) mittels zumindest eines Hebelarmes (16) über eine Lagerstelle (17) mit dem Schaltknauf (1) verbunden ist, wobei die Länge des Hebelarmes (16) des Entriegelungsknopfes (2) im Verhältnis zum vom Entriegelungsknopf (2) bei Betätigung zurückgelegten Weg so bemessen ist, dass der Entriegelungsknopf (2) eine im wesentlichen lineare Bewegung ausführt,
**dadurch gekennzeichnet, dass**
die im Wesentlichen lineare Bewegung des Entriegelungsknopfes (2) in eine Rotationsbewegung eines Umlenkhebels (6) zur Entriegelung der Sperrstange (5) umgesetzt wird.

2. Schalthebel mit Schaltknauf nach Anspruch 1 , **dadurch gekennzeichnet,**
**dass** der Hebelarm (16) drehbar in der Lagerstelle (17) gelagert ist.

3. Schalthebel mit Schaltknauf nach einem der Ansprüche 1 bis 2, **dadurch gekennzeichnet,**
**dass** sich der Umlenkhebel (6) an einem zumindest teilweise kugelförmigen Ende der Sperrstange (5) abstützt.

4. Schalthebel mit Schaltknauf nach einem der Ansprüche 1 bis 3, **dadurch gekennzeichnet,**
**dass** der Entriegelungsknopf (2) durch eine Schenkelfeder (8) beaufschlagt ist, sodass der Entriegelungsknopf (2) in jeder Schaltstellung spielfrei ist.

5. Schalthebel mit Schaltknauf nach Anspruch 4, **dadurch gekennzeichnet,**
**dass** der Umlenkhebel (6) in Wirkverbindung mit einem Lager (7) der Schenkelfeder (8) steht.

6. Schalthebel mit Schaltknauf nach einem der Ansprüche 1 bis 5, **dadurch gekennzeichnet,**
**dass** die Länge des Hebelarmes (16) sehr viel größer als der Abstand eines Lagerungspunktes (11) des Umlenkhebels (6) von dem Lager (7) der Schenkelfeder (8) ist.

7. Schalthebel mit Schaltknauf nach einem der Ansprüche 1 bis 6, **dadurch gekennzeichnet,**
**dass** sich die Schenkelfeder (8) mit einem ersten Schenkel (13) an einem Träger (9) abstützt.

8. Schalthebel mit Schaltknauf nach Anspruch 7, **dadurch gekennzeichnet,**
**dass** der Träger (9) in einer Ausnehmung (14) des Schaltknaufs (1) angeordnet ist.

9. Schalthebel mit Schaltknauf nach Anspruch 8, **dadurch gekennzeichnet,**
**dass** sich die Schenkelfeder (8) mit einem zweiten Schenkel (15) an dem Umlenkhebel (6) abstützt.

## Claims

1. Gearshift lever (3) with gearshift knob (1) for an automatic transmission of a motor vehicle having a ratchet bar (5) guided axially in the gearshift lever (3) as well as a manually actuable release button (2) for actuating the ratchet bar (5) relative to the gearshift lever (3), wherein the release button (2) is disposed in the gearshift knob (1) at the top end of the gearshift lever (3) and the release button (2) is connected by means of at least one lever arm (16) by a bearing point (17) to the gearshift knob (1), wherein the length of the lever arm (16) of the release button (2) in relation to the distance travelled by the release button (2) upon actuation is so dimensioned that the release button (2) executes a substantially linear movement,
**characterized in that**
the substantially linear movement of the release button (2) is converted to a rotational movement of a reversing lever (6) for release of the ratchet bar (5).

2. Gearshift lever with gearshift knob according to claim 1, **characterized in**
**that** the lever arm (16) is mounted rotatably at the bearing point (17).

3. Gearshift lever with gearshift knob according to one of claims 1 to 2, **characterized in**
**that** the reversing lever (6) is supported on an at least partially spherical end of the ratchet bar (5).

4. Gearshift lever with gearshift knob according to one of claims 1 to 3, **characterized in**
**that** the release button (2) is acted upon by a leg spring (8) such that the release button (2) is free of play in every shift position.

5. Gearshift lever with gearshift knob according to claim 4, **characterized in**
**that** the reversing lever (6) is in working connection with a bearing (7) of the leg spring (8).

6. Gearshift lever with gearshift knob according to one of claims 1 to 5, **characterized in**
**that** the length of the lever arm (16) is very much greater than the distance of a bearing point (11) of the reversing lever (6) from the bearing (7) of the leg spring (8).

7. Gearshift lever with gearshift knob according to one of claims 1 to 6, **characterized in**
**that** the leg spring (8) is supported by a first leg (13) against a carrier (9).

8. Gearshift lever with gearshift knob according to claim 7, **characterized in**
**that** the carrier (9) is disposed in a recess (14) of the gearshift knob (1).

9. Gearshift lever with gearshift knob according to claim 8, **characterized in**
**that** the leg spring (8) is supported by a second leg (15) against the reversing lever (6).

## Revendications

1. Levier de changement de vitesse (3) avec un pommeau de changement de vitesse pour une boîte de vitesses automatique d'un véhicule automobile, comprenant une tige de blocage (5) axialement guidée à l'intérieur du levier de changement de vitesse (3) et un bouton de déverrouillage (2) pouvant être actionné manuellement en vue de commander la tige de blocage (5) par rapport au levier de changement de vitesse (3), le bouton de déverrouillage (2) étant aménagé dans le pommeau de changement de vitesse (2) à l'extrémité supérieure du levier de changement de vitesse (3), et le bouton de déverrouillage (2) étant relié au pommeau de changement de vitesse (1) au moyen d'au moins un bras de levier (16), par l'intermédiaire d'un logement palier (17), la longueur du bras de levier (16) du bouton de déverrouillage (2) étant calculée par rapport à la course parcourue par le bouton de déverrouillage (2), lors de l'actionnement de celui-ci, d'une manière telle que le bouton de déverrouillage (2) effectue un mouvement sensiblement linéaire,
**caractérisé en ce que**
le mouvement sensiblement linéaire du bouton de déverrouillage (2) est traduit en un mouvement de rotation d'un levier de renvoi (6) en vue de déverrouiller la tige de blocage (5).

2. Levier de changement de vitesse avec un pommeau de changement de vitesse selon la revendication 1,
**caractérisé en ce que**
le bras de levier (16) est monté pivotant dans le logement palier (17).

3. Levier de changement de vitesse avec un pommeau de changement de vitesse selon l'une des revendications 1 à 2,
**caractérisé en ce que**
le levier de renvoi (6) s'appuie sur une extrémité au moins partiellement sphérique de la tige de blocage (5).

4. Levier de changement de vitesse avec un pommeau de changement de vitesse selon l'une des revendications 1 à 3,
**caractérisé en ce que**
le bouton de déverrouillage (2) est soumis à l'action d'un ressort à branches (8), de sorte que le bouton de déverrouillage (2) soit sans jeu dans toutes les positions de commutation.

5. Levier de changement de vitesse avec un pommeau de changement de vitesse selon la revendication 4,
**caractérisé en ce que**
le levier de renvoi (6) est en liaison d'action avec un logement (7) du ressort à branches (8).

6. Levier de changement de vitesse avec un pommeau de changement de vitesse selon l'une des revendications 1 à 5,
**caractérisé en ce que**
la longueur du bras de levier (16) est beaucoup plus grande que la distance entre un point de logement (11) du levier de renvoi (6) et le logement (7) du ressort à branches (8).

7. Levier de changement de vitesse avec un pommeau de changement de vitesse selon l'une des revendications 1 à 6,
**caractérisé en ce que**
le ressort à branches (8) s'appuie, par une première branche (13), sur un support (9).

8. Levier de changement de vitesse avec un pommeau de changement de vitesse selon la revendication 7,
**caractérisé en ce que**
le support (9) est agencé dans un évidement (14) du pommeau de changement de vitesse (1).

9. Levier de changement de vitesse avec un pommeau de changement de vitesse selon la revendication 8,
**caractérisé en ce que**
le ressort à branches (8) s'appuie, par une deuxième branche (15), sur le levier de renvoi (6).
